# EUROPÄISCHE PATENTANMELDUNG

(11) **EP 2 305 784 A1**
(43) Veröffentlichungstag der Anmeldung: **06.04.2011**
(21) Anmeldenummer: 09174183.5
(22) Anmeldetag: 27.10.2009
(51) Int. Cl.: C11C 3/00, B01J 19/24, B01J 19/30

(54) **Verfahren und Vorrichtung zur kontinuierlichen Herstellung von Alkylestern höherer Fettsäuren**

(30) Priorität: 02.10.2009 DE 102009044168
(71) Anmelder: Green Finance AG, 93053 Regensburg (DE)
(72) Erfinder: Fischer, Uwe, 16225, Eberswalde (DE); Fischer, Stephan, 36277, Schenklengsfeld (DE)
(74) Vertreter: Graf Glück Habersack Kritzenberger

(57) **Zusammenfassung**

Beschrieben wird ein Verfahren zur kontinuierlichen Herstellung von Alkylestern höherer Fettsäuren aus freie Fettsäuren enthaltenden Fettsäuretriglycerid-Ausgangsgemischen in zumindest einem Reaktor 2. Der Reaktor 2 weist in vertikaler Richtung einen unteren Bereich 3, einen über dem unteren Bereich 3 angeordneten mittleren Bereich 4 und einen über dem mittleren Bereich 4 angeordneten oberen Bereich 5 auf. Das erfindungsgemäße Verfahren umfasst die Schritte a) kontinuierliche Zugabe eines freie Fettsäuren enthaltenden Fettsäuretriglycerid-Ausgangsgemisches in den Reaktor 2 durch ein im oberen Bereich 5 des Reaktors 2 angeordnetes Mittel 6 zur Zugabe von Fettsäuretriglycerid-Gemischen, b) kontinuierliche Zugabe zumindest eines Monoalkohols in den Reaktor 2 durch ein im unteren Bereich 3 des Reaktors 2 angeordnetes Mittel 8 zur Zugabe von Monoalkoholen, c) zumindest teilweises Verestern der freien Fettsäuren mit einem Monoalkohol in einer im mittleren Bereich 4 des Reaktors 2 angeordneten Füllkörperschicht 7, d) zumindest teilweises Umestern der Fettsäuretriglyceride mit einem Monoalkohol in der im mittleren Bereich 4 des Reaktors 2 angeordneten Füllkörperschicht 7 und e) kontinuierliche Entnahme der gebildeten Alkylester durch ein im unteren Bereich 3 des Reaktors 2 angeordnetes Mittel 9 zur Entnahme von Alkylestern.

## Beschreibung

### Technisches Gebiet

Die vorliegende Erfindung betrifft ein Verfahren und eine Vorrichtung zur kontinuierlichen Herstellung von Alkylestern höherer Fettsäuren.

### Stand der Technik

Seit geraumer Zeit besteht ein wachsendes Interesse, auf Erdöl-Basis hergestellte Kraftstoffe durch preiswerte und umweltschonende Alternativen zu ersetzen. Der permanent zunehmende Fahrzeugbestand, der insbesondere in den Schwellenländern in Zukunft noch stärker anwachsen wird, bei gleichzeitig abnehmenden Erdölvorkommen erzwingen die Suche nach alternativen Kraftstoffen.

Eine mögliche Kraftstoff-Alternative sind Pflanzenöle, wobei in Mitteleuropa insbesondere Rapsöl als Rohstoff in Betracht kommt. Pflanzenöle weichen allerdings in ihren technischen Eigenschaften von Dieselkraftstoffen in mehreren Punkten ab. Sie weisen eine höhere Dichte und eine geringere Cetanzahl (Zündwilligkeit) als Dieselkraftstoff auf. Dadurch kann es zu einem ungleichmäßigen Laufverhalten des Motors kommen, wodurch Geräuschemissionen deutlich zunehmen. Ferner ist die Viskosität von Rapsöl gegenüber der von Dieselkraftstoff um ein Vielfaches höher, was zu einer schlechteren Zerstäubung und Verbrennung im Brennraum führt. Die Verwendung von reinen Pflanzenölen führt daher in herkömmlichen Motoren zu Verkokungen, verbunden mit erhöhter Partikelemission.

Die genannten Probleme, die bei der Verwendung von reinen Pflanzenölen in nicht entsprechend angepassten Motoren entstehen, lassen sich durch Umwandlung der in Ölen und Fetten enthaltenen Triglyceride beziehungsweise Fettsäureester des Glycerins in Fettsäurealkylester, insbesondere Methyl oder Ethylester, lösen. So können diese auch als Biodiesel bezeichneten Ester relativ problemlos in nichtmodifizierten Dieselmotoren eingesetzt werden, wobei der Ausstoß von unverbrannten Kohlenwasserstoffen und Rußpartikeln im Vergleich zu normalem Dieselkraftstoff auf Erdöl-Basis wesentlich reduziert werden kann.

Da der auf Basis von Pflanzenölen hergestellte Biodiesel jedoch aufgrund der gestiegenen Rohstoffpreise und der erforderlichen Raffinationsverfahren relativ teuer ist, werden immer häufiger alternative Rohstoffe wie beispielsweise in Restaurants anfallende gebrauchte Öle und tierische Fettschmalze eingesetzt.

Die aus dem Stand der Technik bekannten Verfahren zur Herstellung von Biodiesel bedienen sich eines Batch-Betriebs, das heißt, die Edukte werden einem Reaktor zugeführt, die Reaktion bei den entsprechenden Temperatur- und DruckVerhältnissen durchgeführt und anschließend das Produkt aus dem Reaktor entnommen. Diese Verfahren sind sehr zeit- und arbeitsintensiv und deshalb mit hohen Herstellungskosten für den Biodiesel verbunden. Damit Biodiesel auf lange Sicht gegenüber normalem Diesel-Kraftstoff als konkurrenzfähiger Kraftstoff bestehen kann, ist es zwingend erforderlich, seine Herstellungskosten erheblich zu senken.

### Darstellung der Erfindung

Aufgabe der vorliegenden Erfindung ist es, ein kostengünstiges Verfahren zur Herstellung von Biodiesel bereitzustellen. Diese Aufgabe wird erfindungsgemäß durch das Verfahren gemäß unabhängigem Anspruch 1 und die Vorrichtung gemäß unabhängigem Anspruch 20 gelöst. Weitere vorteilhafte Details, Aspekte und Ausgestaltungen der vorliegenden Erfindung ergeben sich aus den abhängigen Ansprüchen, der Beschreibung, der Figur und den Beispielen.

Die vorliegende Erfindung stellt ein Verfahren zur Herstellung von Alkylestern höherer Fettsäuren aus freie Fettsäuren enthaltenden Fettsäuretriglycerid-Ausgangsgemischen in zumindest einem Reaktor zur Verfügung. Der Reaktor weist in vertikaler Richtung einen unteren Bereich, einen über dem unteren Bereich angeordneten mittleren Bereich und einen über dem mittleren Bereich angeordneten oberen Bereich auf. Das erfindungsgemäße Verfahren umfasst die Schritte a) kontinuierliche Zugabe eines freie Fettsäuren enthaltenden Fettsäuretriglycerid-Ausgangsgemisches in den Reaktor durch ein im oberen Bereich des Reaktors angeordnetes Mittel zur Zugabe von Fettsäuretriglycerid-Gemischen, b) kontinuierliche Zugabe zumindest eines Monoalkohols in den Reaktor durch ein im unteren Bereich des Reaktors angeordnetes Mittel zur Zugabe von Monoalkoholen, c) zumindest teilweises Verestern der freien Fettsäuren mit einem Monoalkohol in einer im mittleren Bereich des Reaktors angeordneten Füllkörperschicht, d) zumindest teilweises Umestern der Fettsäuretriglyceride mit einem Monoalkohol in der im mittleren Bereich des Reaktors angeordneten Füllkörperschicht und e) kontinuierliche Entnahme der gebildeten Alkylester durch ein im unteren Bereich des Reaktors angeordnetes Mittel zur Entnahme von Alkylestern.

Im Rahmen der vorliegenden Erfindung wird unter einer "Veresterung" die zur Bildung eines Esters führende Umsetzung eines Alkohols mit einer Säure, insbesondere einer freien Fettsäure, verstanden. Bei der Veresterungsreaktion werden die freien Fettsäuren des Ausgangsgemisches in die Alkylester der freien Fettsäuren überführt.

Im Rahmen der vorliegenden Erfindung wird unter einer "Umesterung" eine Reaktion verstanden, bei der ein Ester, insbesondere ein Fettsäuretriglycerid, in einen anderen Ester, insbesondere einen Alkylester einer höheren Fettsäure, übergeführt wird, beispielsweise durch Alkoholyse in Gegenwart von Säuren oder Alkalien.

Die im mittleren Bereich des Reaktors angeordnete Füllkörperschicht bewirkt ein langsames und gleichmäßiges Absinken des im oberen Bereich des Reaktors zugeführten freie Fettsäuren enthaltenden Fettsäuretriglycerid-Ausgangsgemisches. Im unteren Bereich des Reaktors wird der zweite Reaktand, ein Monoalkohol, möglichst fein verteilt zugegeben. Aufgrund der geringeren Dichte des Monoalkohols steigt dieser in Form kleiner Bläschen oder kleiner Tröpfchen nach oben in die Füllkörperschicht des Reaktors. In der Füllkörperschicht erfolgt die Bildung der Alkylester durch Veresterung der freien Fettsäuren mit dem Monoalkohol und durch Umesterung der Fettsäuretriglyceride mit dem Monoalkohol. Die gebildeten Alkylester weisen eine höhere Dichte auf als die eingesetzten Reaktanden und sinken in den unteren Bereich des Reaktors ab. Dort können sie in relativ reiner Form kontinuierlich entnommen werden.

Das erfindungsgemäße Verfahren bewirkt also eine lange Kontaktzeit zwischen den Reaktanden und ermöglicht gleichzeitig die kontinuierliche Herstellung von Alkylestern höherer Fettsäuren. Durch die lange Kontaktzeit wird die Umsatzrate der Reaktion erhöht, was einer schnelleren Bildung der gewünschten Produkte entspricht und die Herstellungskosten senkt. Der kontinuierliche Betrieb des Reaktors weist erhebliche Vorteile gegenüber dem üblichen Batch-Betrieb auf. Das zeitintensive Neubefüllen des Reaktors nach Entnahme der Reaktionsprodukte entfällt bei einem kontinuierlichen Verfahren gänzlich. Die Herstellungskosten der Alkylester können dadurch deutlich gesenkt werden.

Gemäß einer bevorzugten Ausführungsform erfolgt die Veresterung in Schritt c) in Gegenwart eines sauren Katalysators, insbesondere Schwefelsäure oder p-Toluolsulfonsäure. Ein saurer Katalysator, insbesondere Schwefelsäure oder p-Toluolsulfonsäure, bewirkt eine Erhöhung der Reaktionsgeschwindigkeit der Veresterungsreaktion und damit eine schnellere Bildung der gewünschten Reaktionsprodukte.

Bei "Katalysatoren" handelt es sich um Stoffe, die die Aktivierungsenergie einer chemischen Reaktion herabsetzen und dadurch die Reaktionsgeschwindigkeit erhöhen, ohne die Endprodukte der Reaktion zu verändern.

Gemäß einer bevorzugten Ausführungsform erfolgt alternativ oder in Kombination die Umesterung in Schritt d) in Gegenwart eines basischen Katalysators, insbesondere Kaliumhydroxid, NaOH oder Na-Methylat. Ein basischer Katalysator, insbesondere Kaliumhydroxid, NaOH oder Na-Methylat, bewirkt eine Erhöhung der Reaktionsgeschwindigkeit der Umesterungsreaktion und damit eine schnellere Bildung der gewünschten Reaktionsprodukte.

Bevorzugt wird der Schritt c) zumindest teilweises Verestern der freien Fettsäuren mit einem Monoalkohol in einer im mittleren Bereich des Reaktors angeordneten Füllkörperschicht und der Schritt d) zumindest teilweises Umestern der Fettsäuretriglyceride mit einem Monoalkohol in der im mittleren Bereich des Reaktors angeordneten Füllkörperschicht in voneinander getrennten Reaktoren durchgeführt. Der gleichzeitige Einsatz eines sauren und eines basischen Katalysators bringt erst bei Verwendung getrennter Reaktoren entsprechende Vorteile mit sich.

Bevorzugt handelt es sich bei den freie Fettsäuren enthaltenden Fettsäuretriglycerid-Ausgangsgemischen um gebrauchte oder ungebrauchte, ungereinigte oder gereinigte pflanzliche, tierische oder technische Öle oder Fette oder deren Gemische. Die steigenden Preise für den Rohstoff Rapsöl lassen den Einsatz alternativer, deutlich billigerer Rohstoffe immer attraktiver werden. Das erfindungsgemäße Verfahren kann problemlos mit den genannten, eigentlich Abfallstoffe darstellenden Rohstoffen durchgeführt werden.

Bevorzugt sind die Öle oder Fette ausgewählt aus der Gruppe bestehend aus Soapstock, Brown Grease, Yellow Grease, Talg, Schmalz, Frittierölen, Tierfettabfällen, Altspeisefette, Speisetalg, pflanzliche Rohöle, tierische Fette und deren Gemischen.

Unter "Soapstock" wird ein bei der Verarbeitung von pflanzlichen Ölen anfallendes Nebenprodukt verstanden, das einen Anteil von freien Fettsäuren von etwa 50% bis 80% aufweist.

"Brown Grease" stellt ein tierfetthaltiges Abfallprodukt mit einem Anteil an freien Fettsäuren von über 15% bis 40% dar. "Yellow Grease" enthält etwa 5% bis 15% freie Fettsäuren.

Unter "Talg" und "Schmalz" werden tierische Fette verstanden, die beispielsweise aus Schlachtabfällen gewonnen werden. Der Gehalt an freien Fettsäuren von Talgen liegt zwischen 1 und 20%.

Bei "Tierfetten" handelt es sich um bei der Verwertung von Geflügel, Rindern, Schweinen und Fischen anfallende fetthaltige Abfallprodukte.

Unter "pflanzlichen Rohölen" werden flüssige oder feste Zusammensetzungen verstanden, die aus pflanzlichen Ausgangsmaterialien durch Pressen oder Extraktion gewonnen werden. Daneben werden auch Raffinate oder Halbraffinate der vorstehend genannten pflanzlichen Öle als Ausgangsmaterialien eingesetzt.

Bei tierischen Fetten handelt es sich z. B. um Milchfett, Wollfett, Rindertalg, Schweineschmalz, Fischöle oder Fischtran.

Alle genannten Öle oder Fette können als Ausgangsmaterialien in dem erfindungsgemäßen Verfahren zur kontinuierlichen Herstellung von Alkylestern höherer Fettsäuren eingesetzt werden.

Besonders bevorzugt sind die pflanzlichen Rohöle ausgewählt aus der Gruppe bestehend aus Rapsöl, Rüböl, Sojaöl, Sonnenblumenöl, Palmöl, Maiskeimöl, Baumwollsaatöl, Palmkernfett und Kokosfett.

Bevorzugt werden ungereinigte Fettsäuretriglycerid-Ausgangsgemische vor der Zugabe in den Reaktor gereinigt. Eine Reinigung der Edukte bewirkt einen kontrollierteren Ablauf der Veresterungs- und Umesterungsreaktion und resultiert in einem deutlich reineren Produkt. Besonders bevorzugt besteht die Reinigung in der Verminderung des Wassergehalts der Fettsäuretriglycerid-Ausgangsgemische.

Gemäß einer besonders bevorzugten Ausführungsform der vorliegenden Erfindung handelt es sich bei dem Monoalkohol um einen C₁- bis C₄-Monoalkohol, insbesondere handelt es bei dem Monoalkohol um Methanol. Die genannten Monoalkohole ergeben Alkylester höherer Fettsäuren, die die mit ihrer Verwendung als Kraftstoff verknüpften Anforderungen besonders gut erfüllen.

Bevorzugt wird nach der Entnahme der gebildeten Alkylester aus dem Reaktor ein Aufreinigen der Alkylester durchgeführt. Durch eine Reinigung der gebildeten Alkylester wird ein höherwertiger Kraftstoff mit besonders vorteilhaften Eigenschaften erhalten. Besonders bevorzugt erfolgt die Aufreinigung der Alkylester durch eine Destillation, wodurch ein besonders reines Produkt erhalten wird.

Bei der Verwendung von Methanol als Monoalkohol handelt es sich bei der Destillation der gebildeten Methylester um eine Vakuumdestillation bei 30 bis 80 mbar. Besonders bevorzugt erfolgt die Vakuumdestillation bei einer Temperatur von 195°C bis 280°C.

Gemäß einer weiteren, besonders bevorzugten Ausführungsform der vorliegenden Erfindung wird der Monoalkohol im wesentlichen gleichmäßig über den Reaktorquerschnitt verteilt zugegeben. Durch die genannte Form der Zugabe kommt es zu einer besonders guten und gleichmäßigen Vermischung der Reaktanden, wodurch eine hohe Reaktionsgeschwindigkeit und gute Produktausbeuten sichergestellt werden.

Bevorzugt wird der Monoalkohol flüssig in Form von Tropfen oder dampfförmig in Form von Bläschen in den Reaktor eingebracht. Besonders bevorzugt weisen die Tropfen bzw. die Bläschen einen Durchmesser kleiner 5 mm auf und ganz besonders bevorzugt beträgt der Durchmesser rund 2 mm. Mit abnehmendem Durchmesser der Tropfen bzw. Bläschen verändert sich das Oberflächen/VolumenVerhältnis zu größeren Werten. Da die Veresterungs- bzw. Umesterungsreaktionen an den Grenzflächen zwischen den Phasen der Reaktanden erfolgen, bewirken kleinere Durchmesser eine schnellere Reaktion.

Die vorliegende Erfindung umfasst auch eine Vorrichtung zur kontinuierlichen Herstellung von Alkylestern höherer Fettsäuren aus freie Fettsäuren enthaltenden Fettsäuretriglycerid-Ausgangsgemischen. Die erfindungsgemäße Vorrichtung umfasst zumindest einen Reaktor, wobei der Reaktor in vertikaler Richtung einen unteren Bereich, einen über dem unteren Bereich angeordneten mittleren Bereich und einen über dem mittleren Bereich angeordneten oberen Bereich aufweist. Daneben ist zumindest ein im oberen Bereich angeordnetes Mittel zur kontinuierlichen Zugabe eines freie Fettsäuren enthaltenden Fettsäuretriglycerid-Ausgangsgemisches in den Reaktor vorgesehen, eine im mittleren Bereich angeordnete Schicht von Füllkörpern, zumindest ein im unteren Bereich angeordnetes Mittel zur kontinuierlichen Zugabe eines Monoalkohols in den Reaktor und zumindest ein im unteren Bereich des Reaktors angeordnetes Mittel zur kontinuierlichen Entnahme von Alkylestern aus dem Reaktor.

Die im mittleren Bereich des Reaktors angeordnete Füllkörperschicht bewirkt ein langsames und gleichmäßiges Absinken des im oberen Bereich des Reaktors zugeführten freie Fettsäuren enthaltenden Fettsäuretriglycerid-Ausgangsgemisches. Durch das im unteren Bereich des Reaktors angeordnete Mittel zur kontinuierlichen Zugabe eines Monoalkohols in den Reaktor wird der zweite Reaktand, ein Monoalkohol, möglichst fein verteilt zugegeben. Aufgrund der geringeren Dichte des Monoalkohols steigt dieser in Form kleiner Bläschen oder kleiner Tröpfchen nach oben in die Füllkörperschicht des Reaktors. In der Füllkörperschicht erfolgt die Bildung der Alkylester durch Veresterung der freien Fettsäuren mit dem Monoalkohol und durch Umesterung der Fettsäuretriglyceride mit dem Monoalkohol. Die gebildeten Alkylester weisen eine höhere Dichte auf als die eingesetzten Reaktanden und sinken in den unteren Bereich des Reaktors ab. Dort können sie in relativ reiner Form kontinuierlich durch das im unteren Bereich des Reaktors angeordnete Mittel zur kontinuierlichen Entnahme von Alkylestern aus dem Reaktor entnommen werden.

Die erfindungsgemäße Vorrichtung ermöglicht also eine lange Kontaktzeit zwischen den Reaktanden und erlaubt gleichzeitig die kontinuierliche Herstellung von Alkylestern höherer Fettsäuren. Durch die lange Kontaktzeit wird die Umsatzrate der Reaktion erhöht, was einer schnelleren Bildung der gewünschten Produkte entspricht und die Herstellungskosten senkt. Der kontinuierliche Betrieb des Reaktors weist erhebliche Vorteile gegenüber dem üblichen Batch-Betrieb auf. Das zeitintensive Neubefüllen des Reaktors nach Entnahme der Reaktionsprodukte entfällt bei einem kontinuierlichen Verfahren gänzlich. Die Herstellungskosten der Alkylester können dadurch deutlich gesenkt werden.

Bevorzugt handelt es sich bei dem Mittel zur kontinuierlichen Zugabe eines Monoalkohols um eine Begasungsvorrichtung für Flüssigkeiten, wobei die Begasungsvorrichtung zur Zugabe eines Monoalkohols ausgelegt und eingerichtet ist. Die Verwendung einer Begasungsvorrichtung erlaubt eine besonders gleichmäßige und feine Verteilung des Reaktanden "Monoalkohol" in dem Reaktanden "freie Fettsäuren enthaltendes Fettsäuretriglycerid-Ausgangsgemisch".

Besonders bevorzugt ist die Begasungsvorrichtung zur Zugabe eines C₁- bis C₄-Monoalkohols ausgelegt und eingerichtet. Die genannten Monoalkohole ergeben Alkylester höherer Fettsäuren, die die mit ihrer Verwendung als Kraftstoff verknüpften Anforderungen besonders gut erfüllen.

Besonders bevorzugt umfasst die Begasungsvorrichtung einen Rotor mit einer Drehachse und einen den Rotor umgebenden Stator. Eine solche Begasungsvorrichtung ist an sich aus dem Stand der Technik bekannt (siehe DE 36 16 680 A1 und DE 298 19 704 U1), ist allerdings ausschließlich zur Begasung von Flüssigkeiten vorgesehen und wird auch ausschließlich zur Begasung von Flüssigkeiten eingesetzt. In der erfindungsgemäßen Vorrichtung wird diese Begasungsvorrichtung nicht bestimmungsgemäß zum Einbringen eines Gases eingesetzt, sondern insbesondere zur Einbringung von flüssigen Monoalkohol, insbesondere zur Einbringung von Methanol.

Schon die bloße Funktionstüchtigkeit einer Begasungsvorrichtung bei deren Verwendung als "Befiüssigkeitsvorrichtung" stellt einen überraschenden, unerwarteten Effekt dar. Zudem bewirkt der Einsatz einer einen Rotor mit einer Drehachse und einen den Rotor umgebenden Stator umfassenden Begasungsvorrichtung als Mittel zur kontinuierlichen Zugabe eines Monoalkohols in den Reaktor die Bildung von besonders kleinen Monoalkohol-Tröpfchen und damit ganz besondere Vorteile im Hinblick auf Reaktionsgeschwindigkeit und Ausbeute.

Bevorzugt weist die Begasungsvorrichtung eine Zuleitung für einen Monoalkohol auf, wobei der Monoalkohol dem Rotor in Richtung von dessen Drehachse zugeführt wird. Besonders bevorzugt weist der Stator eine Ringöffnung auf, wobei die Ringöffnung zum Ansaugen der im unteren Bereich vorliegenden Alkylester ausgelegt und eingerichtet ist. Durch die gleichzeitige Zufuhr des Monoalkohols in Richtung der Drehachse des Rotors und dem Ansaugen der Alkylester durch die Ringöffnung erfolgt ein intensives Vermischen von Monoalkohol mit bereits gebildetem Produkt. Die Verteilung des Monoalkohols in dem Alkylester bewirkt eine weitere Erhöhung der Reaktionsgeschwindigkeit. Die physikalischen Eigenschaften der Fettsäuretriglycerid-Ausgangsgemische und der gebildeten Alkylester sind sich relativ ähnlich. Insbesondere ist die gegenseitige Löslichkeit der genannten Stoffe in dem jeweils anderen Stoff deutlich besser als die Löslichkeit von beispielsweise Methanol in den Fettsäuretriglycerid-Ausgangsgemischen. Dadurch wird die Löslichkeit des Reaktanden "Monoalkohol" in dem zweiten Reaktanden Fettsäuretriglycerid-Ausgangsgemisch" erhöht, was zu einer verbesserten Vermischung und in Folge zu einer höheren Reaktionsgeschwindigkeit führt.

Bevorzugt umfasst der Stator eine Mehrzahl von Strömungskanälen, wobei jeder Strömungskanal eine bezogen auf die Drehachse radial innere Eingangsöffnung und eine bezogen auf die Drehachse radial äußere Ausgangsöffnung aufweist. Besonders bevorzugt sind die Strömungskanäle zur Aufnahme und Leitung des vom Rotor geförderten Gemisches aus Monoalkohol und Alkylester ausgelegt und eingerichtet. Durch diese Ausgestaltung erfolgt eine besonders gleichförmige Verteilung des Monoalkohols über den gesamten Reaktorquerschnitt.

Gemäß einer weiteren bevorzugten Ausführungsform handelt es sich bei den Füllkörpern um inerte Füllkörper aus einem keramischen Material, aus Glas oder aus Kunststoff.

Es wird ausdrücklich darauf hingewiesen, dass sämtliche oben beschriebenen Verfahren zur Herstellung von Alkylestern höherer Fettsäuren aus freie Fettsäuren enthaltenden Fettsäuretriglycerid-Ausgangsgemischen unter Verwendung der oben beschriebenen Vorrichtungen zur kontinuierlichen Herstellung von Alkylestern höherer Fettsäuren aus freie Fettsäuren enthaltenden Fettsäuretriglycerid-Ausgangsgemischen durchgeführt werden können. Alle Ausführungsformen des erfindungsgemäßen Verfahrens können also in allen Ausführungsformen der erfindungsgemäßen Vorrichtung durchgeführt werden.

### Wege zur Ausführung der Erfindung

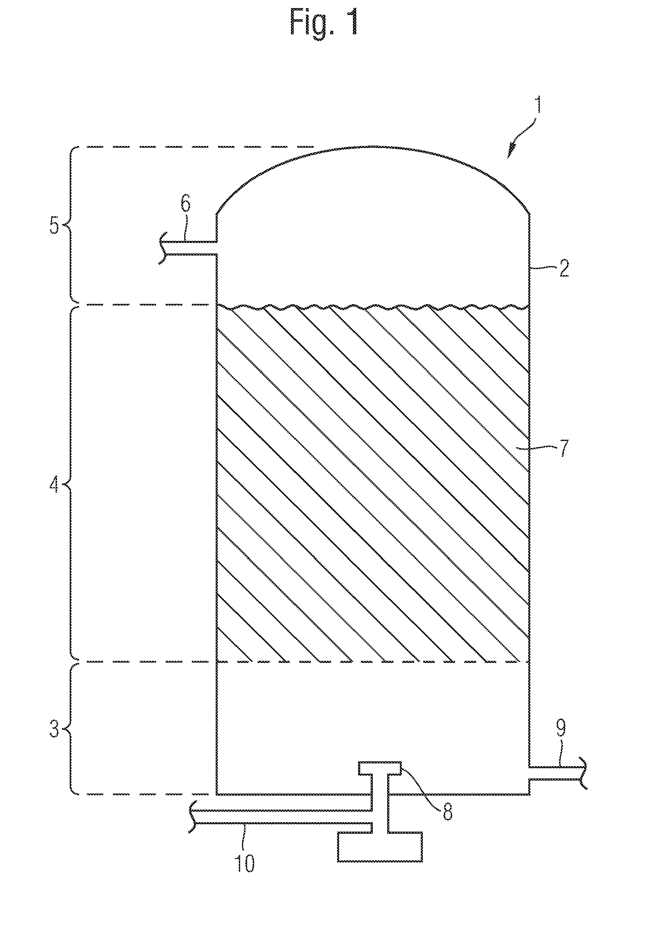

Die Erfindung soll nachfolgend anhand eines Ausführungsbeispieles im Zusammenhang mit der Figur 1 näher erläutert werden. Die Figur 1 zeigt schematisch eine Vorrichtung 1 zur kontinuierlichen Herstellung von Alkylestern höherer Fettsäuren aus freie Fettsäuren enthaltenden Fettsäuretriglycerid-Ausgangsgemischen. Die Vorrichtung 1 umfasst einen Reaktor 2, wobei der Reaktor 2 in vertikaler Richtung einen unteren Bereich 3, einen über dem unteren Bereich 3 angeordneten mittleren Bereich 4 und einen über dem mittleren Bereich 4 angeordneten oberen Bereich 5 aufweist.

Daneben ist zumindest ein im oberen Bereich 5 angeordnetes Mittel 6 zur kontinuierlichen Zugabe eines freie Fettsäuren enthaltenden Fettsäuretriglycerid-Ausgangsgemisches in den Reaktor 2 vorgesehen, eine im mittleren Bereich 4 angeordnete Schicht von Füllkörpern 7, zumindest ein im unteren Bereich 3 angeordnetes Mittel 8 zur kontinuierlichen Zugabe eines Monoalkohols in den Reaktor 2 und zumindest ein im unteren Bereich 3 des Reaktors 2 angeordnetes Mittel 9 zur kontinuierlichen Entnahme von Alkylestern aus dem Reaktor 2.

Die im mittleren Bereich 4 des Reaktors 2 angeordnete Füllkörperschicht 7 bewirkt ein langsames und gleichmäßiges Absinken des im oberen Bereich 5 des Reaktors 2 zugeführten freie Fettsäuren enthaltenden Fettsäuretriglycerid-Ausgangsgemisches. Bei den die Füllkörperschicht 7 bildenden Füllkörpern handelt es sich um keramische Elemente mit einem Gewicht von wenigen Gramm. Durch das im unteren Bereich 3 des Reaktors 2 angeordnete Mittel 8 zur kontinuierlichen Zugabe eines Monoalkohols in den Reaktor 2 wird der zweite Reaktand, Methanol, möglichst fein verteilt zugegeben. Aufgrund der geringeren Dichte des Methanols steigt dieser in Form kleiner Bläschen oder kleiner Tröpfchen nach oben in die Füllkörperschicht 7 des Reaktors 2.

In der Füllkörperschicht 7 erfolgt die Bildung der Methylester durch Veresterung der freien Fettsäuren mit Methanol und durch Umesterung der Fettsäuretriglyceride mit Methanol. Die gebildeten Methylester weisen eine höhere Dichte auf als die eingesetzten Reaktanden und sinken in den unteren Bereich des Reaktors 2 ab. Dort können sie in relativ reiner Form kontinuierlich durch das im unteren Bereich 3 des Reaktors 2 angeordnete Mittel 9 zur kontinuierlichen Entnahme von Alkylestern aus dem Reaktor 2 entnommen werden.

Bei dem Mittel 8 zur kontinuierlichen Zugabe eines Monoalkohols handelt es um eine Begasungsvorrichtung für Flüssigkeiten, wobei die Begasungsvorrichtung für die Zugabe von Methanol ausgelegt und eingerichtet ist. Die Begasungsvorrichtung weist einen Rotor mit einer Drehachse, einen den Rotor umgebenden Stator und eine Zuleitung 10 für Methanol auf, wobei das Methanol dem Rotor in Richtung von dessen Drehachse zugeführt wird. Der Stator weist eine Ringöffnung auf, wobei die Ringöffnung zum Ansaugen der im unteren Bereich 3 des Reaktors 2 vorliegenden Alkylester ausgelegt und eingerichtet ist.

Der Stator umfasst eine Mehrzahl von Strömungskanälen (nicht gezeigt), wobei jeder Strömungskanal eine bezogen auf die Drehachse radial innere Eingangsöffnung und eine bezogen auf die Drehachse radial äußere Ausgangsöffnung aufweist. Die Strömungskanäle sind zur Aufnahme und Leitung des vom Rotor geförderten Gemisches aus Methanol und Alkylester ausgelegt und eingerichtet.

Die beschriebene Vorrichtung 1 bewirkt eine besonders gleichförmige Verteilung des Methanols über den gesamten Reaktorquerschnitt, ermöglicht eine lange Kontaktzeit zwischen den Reaktanden und erlaubt gleichzeitig die kontinuierliche Herstellung von Alkylestern höherer Fettsäuren. Durch die lange Kontaktzeit wird die Umsatzrate der Reaktion erhöht, was einer schnelleren Bildung der gewünschten Produkte entspricht und die Herstellungskosten der Alkylester dadurch deutlich senkt.

### Bezugszeichenliste

- 1: Vorrichtung zur kontinuierlichen Herstellung von Alkylestern höherer Fettsäuren
- 2: Reaktor
- 3: unterer Bereich des Reaktors
- 4: mittlerer Bereich des Reaktors
- 5: oberer Bereich des Reaktors
- 6: Zuleitung Fettsäuretriglycerid-Ausgangsgemisch
- 7: Füllkörperschicht
- 8: Begasungsvorrichtung zur Zugabe von Methanol
- 9: Ableitung zur Entnahme der gebildeten Methylester
- 10: Zuleitung Methanol

## Patentansprüche

1. Verfahren zur kontinuierlichen Herstellung von Alkylestern höherer Fettsäuren aus freie Fettsäuren enthaltenden Fettsäuretriglycerid-Ausgangsgemischen in zumindest einem Reaktor (2), wobei der Reaktor (2) in vertikaler Richtung einen unteren Bereich (3), einen über dem unteren Bereich (3) angeordneten mittleren Bereich (4) und einen über dem mittleren Bereich (4) angeordneten oberen Bereich (5) aufweist, umfassend die Schritte
a) kontinuierliche Zugabe eines freie Fettsäuren enthaltenden Fettsäuretriglycerid-Ausgangsgemisches in den Reaktor (2) durch ein im oberen Bereich (5) des Reaktors (2) angeordnetes Mittel (6) zur Zugabe von Fettsäuretriglycerid-Gemischen,
b) kontinuierliche Zugabe zumindest eines Monoalkohols in den Reaktor (2) durch ein im unteren Bereich (3) des Reaktors (2) angeordnetes Mittel (8) zur Zugabe von Monoalkoholen,
c) zumindest teilweises Verestern der freien Fettsäuren mit einem Monoalkohol in einer im mittleren Bereich (4) des Reaktors (2) angeordneten Füllkörperschicht (7),
d) zumindest teilweises Umestern der Fettsäuretriglyceride mit einem Monoalkohol in der im mittleren Bereich (4) des Reaktors (2) angeordneten Füllkörperschicht (7) und
e) kontinuierliche Entnahme der gebildeten Alkylester durch ein im unteren Bereich (3) des Reaktors (2) angeordnetes Mittel (9) zur Entnahme von Alkylestern.

2. Verfahren nach Anspruch 1, **dadurch gekennzeichnet, dass** die Veresterung in Schritt c) in Gegenwart eines sauren Katalysators, insbesondere Schwefelsäure oder p-Toluolsulfonsäure, erfolgt und/oder die Umesterung in Schritt d) in Gegenwart eines basischen Katalysators, insbesondere Kaliumhydroxid, NaOH oder Na-Methylat, erfolgt.

3. Verfahren nach zumindest einem der Ansprüche 1 und 2, **dadurch gekennzeichnet, dass** die Schritte c) und d) in voneinander getrennten Reaktoren erfolgen.

4. Verfahren nach zumindest einem der Ansprüche 1 bis 3, **dadurch gekennzeichnet, dass** es sich bei den freie Fettsäuren enthaltenden Fettsäuretriglycerid-Ausgangsgemischen um gebrauchte oder ungebrauchte, ungereinigte oder gereinigte pflanzliche, tierische oder technische Öle oder Fette oder deren Gemische handelt, insbesondere um Öle oder Fette ausgewählt aus der Gruppe bestehend aus Soapstock, Brown Grease, Yellow Grease, Talg, Schmalz, Frittierölen, Tierfettabfällen, Altspeisefette, Speisetalg, pflanzliche Rohöle, tierische Fette und deren Gemischen, wobei die pflanzlichen Rohöle bevorzugt ausgewählt sind aus der Gruppe bestehend aus Rapsöl, Rüböl, Sojaöl, Sonnenblumenöl, Palmöl, Maiskeimöl, Baumwollsaatöl, Palmkernfett und Kokosfett.

5. Verfahren nach Anspruch 4, **dadurch gekennzeichnet, dass** die ungereinigten Fettsäuretriglycerid-Ausgangsgemische vor der Zugabe in den Reaktor gereinigt werden, wobei die Reinigung insbesondere in der Verminderung des Wassergehalts besteht.

6. Verfahren nach zumindest einem der Ansprüche 1 bis 5, **dadurch gekennzeichnet, dass** es sich bei dem Monoalkohol um einen C₁- bis C₄-Monoalkohol, insbesondere um Methanol handelt.

7. Verfahren nach zumindest einem der Ansprüche 1 bis 6, **dadurch gekennzeichnet, dass** nach Schritt e) der Schritt
f) Aufreinigen der Alkylester
durchgeführt wird, wobei die Aufreinigung der Alkylester insbesondere durch eine Destillation, bevorzugt durch eine Vakuumdestillation bei 30 bis 80 mbar erfolgt.

8. Verfahren nach Anspruch 7, **dadurch gekennzeichnet, dass** die Vakuumdestillation bei einer Temperatur von 195°C bis 280°C erfolgt.

9. Verfahren nach zumindest einem der Ansprüche 1 bis 8, **dadurch gekennzeichnet, dass** der Monoalkohol im wesentlichen gleichmäßig über den Reaktorquerschnitt verteilt zugegeben wird.

10. Verfahren nach zumindest einem der Ansprüche 1 bis 9, **dadurch gekennzeichnet, dass** der Monoalkohol flüssig in Form von Tropfen oder dampfförmig in Form von Bläschen in den Reaktor (2) eingebracht wird, wobei die Tropfen bzw. die Bläschen bevorzugt einen Durchmesser kleiner 5 mm, insbesondere einen Durchmesser von rund 2 mm aufweisen.

11. Vorrichtung (1) zur kontinuierlichen Herstellung von Alkylestern höherer Fettsäuren aus freie Fettsäuren enthaltenden Fettsäuretriglycerid-Ausgangsgemischen, umfassend zumindest einen Reaktor (2), wobei der Reaktor (2) in vertikaler Richtung einen unteren Bereich (3), einen über dem unteren Bereich (3) angeordneten mittleren Bereich (4) und einen über dem mittleren Bereich (4) angeordneten oberen Bereich (5) aufweist, umfassend
- zumindest ein im oberen Bereich (5) angeordnetes Mittel (6) zur kontinuierlichen Zugabe eines freie Fettsäuren enthaltenden Fettsäuretriglycerid-Ausgangsgemisches in den Reaktor (2),
- eine im mittleren Bereich (4) angeordnete Schicht von Füllkörpern (7), insbesondere eine Schicht von inerten Füllkörpern aus einem keramischen Material, aus Glas oder aus Kunststoff,
- zumindest ein im unteren Bereich (3) angeordnetes Mittel (8) zur kontinuierlichen Zugabe eines Monoalkohols in den Reaktor (2) und
- zumindest ein im unteren Bereich (3) des Reaktors (2) angeordnetes Mittel (9) zur kontinuierlichen Entnahme von Alkylestern aus dem Reaktor (2).

12. Vorrichtung nach Anspruch 11, **dadurch gekennzeichnet, dass** es sich bei dem Mittel (8) zur kontinuierlichen Zugabe eines Monoalkohols um eine Begasungsvorrichtung für Flüssigkeiten handelt, wobei die Begasungsvorrichtung zur Zugabe eines Monoalkohols, insbesondere zur Zugabe eines C₁- bis C₄-Monoalkohols ausgelegt und eingerichtet ist.

13. Vorrichtung nach zumindest einem der Ansprüche 11 und 12, **dadurch gekennzeichnet, dass** die Begasungsvorrichtung einen Rotor mit einer Drehachse und einen den Rotor umgebenden Stator umfasst.

14. Vorrichtung nach Anspruch 13, **dadurch gekennzeichnet, dass** die Begasungsvorrichtung eine Zuleitung für einen Monoalkohol aufweist, wobei der Monoalkohol dem Rotor in Richtung von dessen Drehachse zugeführt wird.

15. Vorrichtung nach zumindest einem der Ansprüche 13 und 14, **dadurch gekennzeichnet, dass** der Stator eine Ringöffnung aufweist, wobei die Ringöffnung zum Ansaugen der im unteren Bereich (3) des Reaktors (2) vorliegenden Alkylester ausgelegt und eingerichtet ist, wobei der Stator bevorzugt eine Mehrzahl von Strömungskanälen umfasst, wobei jeder Strömungskanal eine bezogen auf die Drehachse radial innere Eingangsöffnung und eine bezogen auf die Drehachse radial äußere Ausgangsöffnung aufweist, wobei die Strömungskanäle insbesondere zur Aufnahme und Leitung des vom Rotor geförderten Gemisches aus Monoalkohol und Alkylester ausgelegt und eingerichtet sind.
